**Europäisches Patentamt**

**European Patent Office**

**Office européen des brevets**

(19)

(11) Veröffentlichungsnummer : **0 390 300 B1**

# (12) EUROPÄISCHE PATENTSCHRIFT

(45) Veröffentlichungstag der Patentschrift :
**17.06.92 Patentblatt 92/25**

(51) Int. Cl.$^5$ : **B29C 67/14, // B29L31:32**

(21) Anmeldenummer : **90250081.8**

(22) Anmeldetag : **22.03.90**

(54) **Verfahren zur Herstellung eines Radkörpers.**

(30) Priorität : **28.03.89 DE 3910370**
**24.11.89 DE 3939358**

(43) Veröffentlichungstag der Anmeldung :
**03.10.90 Patentblatt 90/40**

(45) Bekanntmachung des Hinweises auf die
Patenterteilung :
**17.06.92 Patentblatt 92/25**

(84) Benannte Vertragsstaaten :
**DE FR GB IT**

(56) Entgegenhaltungen :
**DE-B- 2 001 132**
**GB-A- 1 312 543**
**US-A- 4 061 520**
**US-A- 4 419 908**

(73) Patentinhaber : **HMS ANTRIEBSSYSTEME**
**GMBH**
**Kurfürstenstrasse 14**
**W-1000 Berlin 30 (DE)**

(72) Erfinder : **Holstein, Wolfgang, Dr.-Ing.**
**Ansbacher Strasse 72**
**W-1000 Berlin 30 (DE)**
Erfinder : **Nick, Hans-Jürgen, Dipl.-Ing.**
**Fritz-Reuter-Strasse 7**
**W-1000 Berlin 62 (DE)**

(74) Vertreter : **Christiansen, Henning, Dipl.-Ing.**
**Patentanwalt Pacelliallee 43/45**
**W-1000 Berlin 33 (DE)**

EP 0 390 300 B1

Jouve, 18, rue Saint-Denis, 75001 PARIS

## Beschreibung

Die Erfindung betrifft ein Verfahren der im Oberbegriff des Anspruchs 1 angegebenen Art sowie einen Radkörper der im Oberbegriff des Anspruchs 17 angegebenen Art, vorzugsweise hergestellt nach dem Verfahren des Anspruchs 1.

Derartige Radkörper werden gewöhnlich aus Aluminium oder anderen geeigneten Metallen hergestellt. Sie genügen den gestellten Festigkeitsanforderungen, sind jedoch schwer und aufwendig in der Herstellung, insbesondere bei kleinen Stückzahlen. Man ist deshalb dazu übergegangen, Radkörper aus faserverstärktem Kunststoff zu fertigen, die auch als Verbundwerkstoff-Radkörper bezeichnet werden. Solche Radkörper weisen ein geringes Gewicht auf.

Ein derartiges Verfahren zur Herstellung eines Radkörpers vorzugsweise einer Fahrradfelge, ist aus der US-PS 40 30 754 bekannt. Die Felge wird dabei aus drei Schichten, einem inneren Ring, einem geschäumten Kernelement und einem äußeren Ring, aufgebaut. Zunächst wird der äußere Ring gefertigt, derart, daß in eine Reifenform mit vorbestimmten Durchmesser kohlefaserverstärkter, geharzter Kunststoff gelegt wird, der anschließend gerollt und ausgehärtet wird. Die Fasern der einzelnen geharzten, faserverstärkten Kunststoffschichten sind dabei parallel zueinander ausgerichtet. Der innere Ring mit einem in bezug auf den äußeren Ring geringeren Durchmesser wird auf dieselbe Art und Weise gefertigt und nach dem Aushärten und Entformen konzentrisch im Inneren des äußeren Rings angeordnet. Die beiden Ringe werden dabei zueinander von einer Vorrichtung in einer vorbestimmten Position derart gehalten, daß die beiden Seitenbereiche des inneren und äußeren Rings jeweils in einer Ebene liegen und der Abstand der Ringe zueinander konstant und somit konzentrisch gehalten wird. Der Raum zwischen den Ringen, der durch die unterschiedlichen Durchmesser der Ringe und durch die konzentrische Anordnung der Ringe entsteht, wird anschließend ausgeschäumt, so daß zwischen den Ringen ein geschäumtes Kernelement entsteht. Ein derartiger aus der US-PS 40 30 754 bekannter Radkörper aus faserverstärktem Kunststoff, vorzugsweise Kohlefasern, mit einem geschäumten Kernelement weist dabei folgenden Aufbau auf: Das Kernelement, vorzugsweise aus Harzschaumstoff bestehend, bildet in den Seitenbereichen des Radkörpers die jeweilige Seitenwand, während der äußere Ring die Außenwand und der innere Ring die Innenwand bildet.

Die Verwendung von kohlefaserverstärktem Kunststoff mit einem geschäumten Kernelement hat sich zwar wegen des geringen Gewichts und der hohen Festigkeit der daraus gefertigten Radkörper bewährt, das bekannte Verfahren zur Herstellung eines Radkörpers aus faserverstärktem Kunststoff mit einem geschäumten Kernelement hat jedoch den Nachteil, daß das Verfahren fertigungstechnisch sehr aufwendig und kostenintensiv ist. Die Kernelemente können nur im Zusammenhang mit den ausgehärteten faserverstärkten Kunststoffringen hergestellt werden. Bei dieser Art der Fertigung, in dem die Zwischenerzeugnisse bzw. Enderzeugnisse in Abhängigkeit voneinander gefertigt werden, wird bei Störungen im Produktionsablauf in einem Teilabschnitt die ganze Fertigungslinie blockiert. Desweiteren sind sehr aufwendige Vorrichtungen für das Ausschäumen der Radkörper notwendig. Die Fertigungszeit addiert sich bei diesem Verfahren für jeden Fertigungsabschnitt, da ein paralleles Herstellen der einzelnen Zwischenprodukte, der Ringe und des Kernelements bei diesem Verfahren nicht möglich ist.

Der durch das eben genannte, bekannte Verfahren hergestellte Radkörper mit einem ausgeschäumten Kernelement und faserverstärkten Kunststoffwandungen hat weiterhin den Nachteil, daß die Seitenwandungen des Radkörpers durch das ausgeschäumte Kernelement gebildet werden. Da das Kernelement eine geringere Dichte aufweist, sind die Seitenwandungen auch gegen mechanische Beanspruchung weitaus empfindlicher. Dies erweist sich, bei Verwendung als Fahrradfelge, im Hinblick auf die Bremsvorrichtungen als nachteilig, da gewöhnlich die Seitenwandungen als Anpreßfläche für die Bremsklötze dienen. Der Vorteil der erhöhten Festigkeit und Biegesteifigkeit, durch die Anordnung von faserverstärktem Kunststoff mit gerichteten Fasern, in der radial inneren Wandung und der radial äußeren Wandung des Radkörpers, wird in nachteilhafter Weise bei den Seitenwandungen nicht genutzt. An den Seitenwandungen fehlt der faserverstärkte Kunststoff. Dadurch muß ein stärker aushärtender, schwerer Schaum verwendet werden, um die notwendige Festigkeit zu gewährleisten und um gegen die mechanischen Beanspruchungen eine ausreichende Oberflächenfestigkeit entgegenzusetzen. Der durch das bekannte Verfahren und durch den bekannten Aufbau zunächst erstrebte Vorteil der Gewichtseinsparung wird durch den schweren Schaum wieder zunichte gemacht. Auch besteht die Möglichkeit, daß sich Feuchtigkeit in den Poren des Kernelements ansammelt und so das Gewicht des Radkörpers zusätzlich erhöht wird.

Der Erfindung liegt die Aufgabe zugrunde, bei einem Verfahren der eingangs genannten Gattung die Anwendbarkeit zu verbessern und die Voraussetzungen dafür zu schaffen, daß das Verfahren eine Konstruktion zuläßt, in der das Kernelement des Radkörpers vollständig vor Feuchtigkeit und äußerer mechanischer Beanspruchung geschützt ist. Dabei soll insbesondere die Herstellung des Kernelements des Radkörpers unabhängig von der Herstellung anderer Zwischenprodukte gestaltet werden. Ebenso soll eine hohe Festigkeit und Biegesteifigkeit, sowie ein sehr leichtes Gewicht des Radkörpers gewährleistet sein.

Die Aufgabe zur Herstellung eines Radkörpers mit den beschriebenen Eigenschaften wird mit den kennzeichnenden Merkmalen des Anspruchs 1 gelöst. Ferner wird der mit diesem Verfahren herstellbare Radkörper mit den kennzeichnenden Merkmalen des Anspruchs 17 offenbart.

Der Erfindung liegt die Erkenntnis zugrunde, daß sich das Kernelement unabhängig von der Herstellung der Wandungen fertigen läßt und im Endzustand vollständig von dem faserverstärkten Verbundwerkstoff umhüllt wird. Das Kernelement ist dabei elastisch ausgebildet, so daß es zum einen strangartig gefertigt und zum anderen in eine Reifenteilpreßform gelegt werden kann. Durch die strangartige Fertigung kann das Kernelement auf Spulen auf- und abgewickelt werden oder in die entsprechende, vom Durchmesser der Felgen abhängige, Länge geschnitten werden. Desweiteren ist es fertigungstechnisch günstig Gewebefäden einer Wickellage entsprechend in eine Reifenteilpreßform zu wickeln. Auch wird eine faserverstärkte Gewebeschicht fertigungsgerecht vorbereitet, so daß die Gewebeschicht den Anforderungen an den Radkörper jeweils entsprechend, um das Kernelement gewickelt oder gezogen wird. Der Radkörper wird nach dem Prinzip des Aufbaus, von Innen nach Außen, hergestellt, wobei hierfür ein Verfahren aufgezeigt wird.

Der Erfindung liegt weiter die Erkenntnis zugrunde, daß die Festigkeit und die Biegesteifigkeit des Radkörpers dadurch erhöht und das Kernelement vor mechanischer Beanspruchung und Feuchtigkeit dadurch geschützt wird, daß das Kernelement vollständig von faserverstärktem Kunststoff umhüllt wird und dabei einen geschlossenen, torsionssteifen Kasten bildet.

Besonders vorteilhaft dabei ist, daß ein, insbesondere harzgetränkter, Gewebefaden in eine erste, einen in radialer Richtung des Radkörpers innen gelegenen im wesentlichen zylindrisch ausgebildeten Wandungsteil enthaltende Reifenteilpreßform tangential gewickelt wird, so daß die so gebildete Wickellage dieses Wandungsteil der ersten Reifenteilpreßform im wesentlichen bedeckt. Ein zunächst stabförmiges, elastisches, durch Verbindung seiner beiden aneinander anliegende Enden ringförmig geschlossen ausgebildetes Kernelement wird in die erste Reifenteilpreßform auf die Wickellage aufgelegt. Mindestens ein weiterer Gewebefaden wird anschließend an die erste Wickellage derart tangential gewickelt, daß das Kernelement im wesentlichen vollständig mit der Wickellage bedeckt ist. Eine zweite Reifenteilpreßform wird auf die erste Reifenteilpreßform aufgelegt und mit der ersten Reifenteilpreßform derart unter Druckeinwirkung verbunden, daß das von einer Wickellage umgebene Kernelement in der durch die Reifenteilpreßformen vorbestimmten Weise geformt wird. Die derart geformte und aus den Reifenteilpreßformen herausgelöste Felge wird bei erhöhter Temperatur ausgehärtet.

Als von Vorteil erweist sich auch das Kernelement separat zu fertigen. Das Kernelement kann dadurch strangartig günstig hergestellt werden, wobei es zum Zwischenlagern aufgespult werden kann, gleich nach dem Austrocknen, dem gewünschten Durchmesser entsprechend, zugeschnitten werden kann und/oder ohne größeren Aufwand andere, beanspruchungsabhängige Querschnitte erhalten kann. Desweiteren können ohne weiteres zusätzliche anspruchungsgerechte Verstärkungen an der radial inneren oder der radial äußeren Wandung des Radkörpers angebracht werden. Die einzelnen Wandungen, die Innen-, die Außen- und die beiden Seitenwandungen können hierbei unterschiedlich dicke Wickellagen aufweisen.

Insbesondere sind folgende vorteilhafte Weiterbildungen günstig:

Das Kernelement wird vor dem Einbringen in die Reifenteilpreßform zusätzlich von einer Gewebeschicht mit einer vorzugsweise radial oder diagonal ausgerichteten Faserstruktur umgeben. Die Gewebeschicht wird dabei in Kunststoff getränkt. Durch diese zusätzliche Gewebeschicht wird die Festigkeit des Radkörpers weiter erhöht.

Das Umgeben des Kernelements mit der Gewebeschicht erfolgt dadurch, daß ein die Gewebeschicht bildender Gewebeschlauch über das stabförmige, elastische Kernelement gezogen wird, wobei die jeweiligen Enden des Gewebeschlauchs so aneinander anliegend überlappend angeordnet werden, daß das Kernelement und der darüber angeordnete Gewebeschlauch einen geschlossenen Ring bilden. Bei dieser Art der Aufbringung der Gewebeschicht wird in nur einem Arbeitsgang das Kernelement vollständig mit einer Gewebeschicht um hüllt. Ein homogener Schichtaufbau wird dadurch zusätzlich gewährleistet.

Das Umgeben des Kernelements mit der Gewebeschicht kann auch dadurch erfolgen, daß das stabförmige, elastische Kernelement mit einem Gewebeband in gleichmäßiger Schichtung in längs und/oder quer zur tangentialen Richtung umwickelt wird, wobei die jeweiligen Enden des zu umwickelnden, einen Ring bildenden Kernelements aneinander anliegen. Dabei können die Gewebebänder in einzelnen Schichten in einem vorbestimmten Winkel zueinander aufgebracht werden.

In vorteilhafter Weise kann bei dieser Art der Aufbringung die Dicke der Gewebeschicht um das Kernelement herum kontinuierlich vergrößert werden. Durch die Wicklung des Gewebebandes erhöht sich hierbei vorteilhaft das Dämpfungsverhalten des Radkörpers.

Als günstig für einige Ausformungen des Radkörpers erweist sich auch, mehrere Kernelemente in die erste Reifenteilpreßform auf die Wickellage zu legen. Dies hat den Vorteil, daß durch mehrere Kernelemente, die in ihrer Gesamtheit aneinander anliegend eine spezielle Querschnittsfläche bilden, ein aufwendiges Herstellungsverfahren für ein Kernelement mit eben dieser speziellen Querschnittsfläche vorteilhaft vermieden werden kann.

Einen wesentlichen Gewichts- und Fertigungsvorteil bringt ein als Kernelement ausgebildeter elastischer Folienschlauch, der nach dem Verbinden der Enden mit Gas gefüllt wird. Dabei wird das Gas durch eine in den Folienschlauch injizierte Gaszufuhrleitung in den Folienschlauch gepumpt. Das Kernelement wird dann entsprechend den genannten Verfahrensschritten weiter behandelt. Bei der beim Aushärtvorgang notwendigen Erwärmung drückt der Folienschlauch durch das sich ausdehnende, sich im Folienschlauch befindliche Gas gleichmäßig nach außen. Dabei wirken durch den nachgebbaren, nun einen erhöhten Gasinnendruck aufweisenden Folienschlauch zusätzliche Kompressionskräfte von dem Folienschlauch auf die Gewebeschicht. Der äußerste Bereich der Gewebeschicht ist dann bereits ausgehärtet, wenn die Kompressionskräfte mit der Erwärmung des Gases wirksam werden.

Durch eine spezielle Anordnung mehrerer Folienschläuche, insbesondere für die Ausformung des Radkörpers als Drahtreifenfelge eines Fahrrads, wird der Folienschlauch nach dem Aushärten aufgeschnitten und mechanisch nachbehandelt. Dies erleichtert die Ausgestaltung einfacher Reifenteilpreßformen erheblich, da zunächst einfache Außenkonturen des Radkörpers gestaltet und dann verfeinert werden können.

Beim Vorgang des Formpressens von der inneren Wandung der zweiten Reifenteilpreßform auf die nach außen zeigende Fläche der Wickellage, wird eine axial symmetrische bzw. gleichförmige und tangential gleichförmige Druckverteilung bezüglich der Außenflächen der Wickellage erzeugt. Durch diese Maßnahme wird ein querschnittshomogener, konzentrischer Radkörper gewährleistet.

Die Dicke des stabförmigen Kernelements in dem Bereich der sich überlappenden Gewebeschicht ist jeweils geringer ausgebildet als die Dicke des sich nicht überlappenden Bereichs. Dabei entspricht die radiale bzw. axiale Gesamtdicke des Radkörpers im Bereich mit überlappenden Gewebeschichten, jeweils der radialen Gesamtdicke des Radkörpers im Bereich der sich nicht überlappenden Gewebeschichten. Nach dem Aushärten werden Bohrungen für Speichen erzeugt. Die zweite Reifenteilpreßform, bestehend aus einem Druckring, einem Sauggewebe, einem Luftschlauch und einem Spannring, wird in der Weise zusammengefügt, daß nacheinander aufgelegt werden: der Druckring auf die Gewebeschicht, das Sauggewebe auf die Seiteninnenwandungen und dem Druckring, ein Luftschlauch auf das Sauggewebe, der Spannring auf die Stirnseiten der ersten Reifenteilpreßform und den Luftschlauch. Der Druck für die Verformung wird durch Verspannen des Spannrings und durch Aufblasen des Luftschlauchs erzeugt. Dadurch läßt sich in einfacher Weise der Verformungsvorgang realisieren. Ferner wird durch das Pressen mit einem Luftschlauch ein hydrostatischer Spannungszustand erreicht, so daß das Bauteil optimal verdichtet wird.

Besonders vorteilhaft bei dem Radkörper aus faserverstärktem Kunststoff ist, daß das elastisch ausgebildete Kernelement vollständig von dem faserverstärkten Kunststoff umhüllt wird. Das Kernelement ist ringförmig ausgebildet und besteht im wesentlichen aus Schaumstoff. Wahlweise sind aber auch mehrere beanspruchungsgerechte Kernelemente in dem Radkörper angeordnet, wodurch sich günstig die Torsionssteifigkeit erhöht.

Gemäß einer anderen vorteilhaften Weiterbildung ist das Kernelement als ein, insbesondere aus Polyamid bestehender, Folienschlauch ausgebildet, so daß sich das Gewicht des Kernelements vorteilhaft reduziert.

Weiterhin sind die Seitenwandungen des Radkörpers als Bremsflächen für eine Felgenbremse ausgebildet. Der Radkörper ist hierbei derart ausgestaltet, daß eine Aufnahme eines Drahtreifens möglich ist. Durch den Verbundwerkstoff wird eine hohe Festigkeit und Biegesteifigkeit, sowie ein sehr leichtes Gewicht des Radkörpers gewährleistet. Der Radkörper zeichnet sich weiter durch überlegene Querbiegefestigkeitseigenschaften aus.

Vorteilhafte Weiterbildungen der Erfindung sind in den Unteransprüchen gekennzeichnet bzw. werden nachstehend zusammen mit der Beschreibung der bevorzugten Ausführungen der Erfindung anhand der Figuren näher dargestellt. Es zeigen:

Figuren 1a und 1b eine Seitenansicht der zusammengefügten Reifenteilpreßformen mit einem aufgebrochenen Bereich der die Anordnung der Wickellage, der Gewebeschicht und des Kernelements in den Reifenteilpreßformen sichtbar macht und einen Querschnitt eines Ausschnitts A-A der Reifenteilpreßformen,

Figuren 2a bis 2c perspektivische Darstellungen von Ausschnitten der verwendeten Teile und eines Teilaufbaus des Radkörpers gemäß einer weiteren Variante des Verfahrens zur Herstellung des Radkörpers,

Figur 3 eine perspektivische, Explosionsdarstellung eines Ausschnitts des Aufbaus eines Kernstücks mit Gewebelage gemäß einer Variante des Verfahrens zur Herstellung des Radkörpers,

Figur 4 eine perspektivische Darstellung eines Ausschnitts des Radkörpers gemäß einer weiteren Variante des Verfahrens zur Herstellung des Radkörpers,

Figur 5 eine perspektivische Darstellung eines Ausschnitts eines fertiggeformten Radkörpers mit Bohrungen, sowie

Figur 6 eine perspektivische Darstellung eines Ausschnitts eines weiteren fertiggeformten Radkörpers mit Bohrungen.

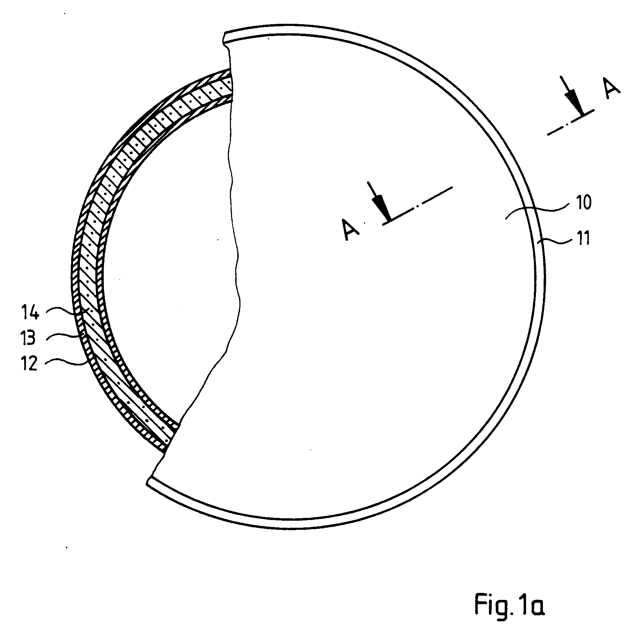

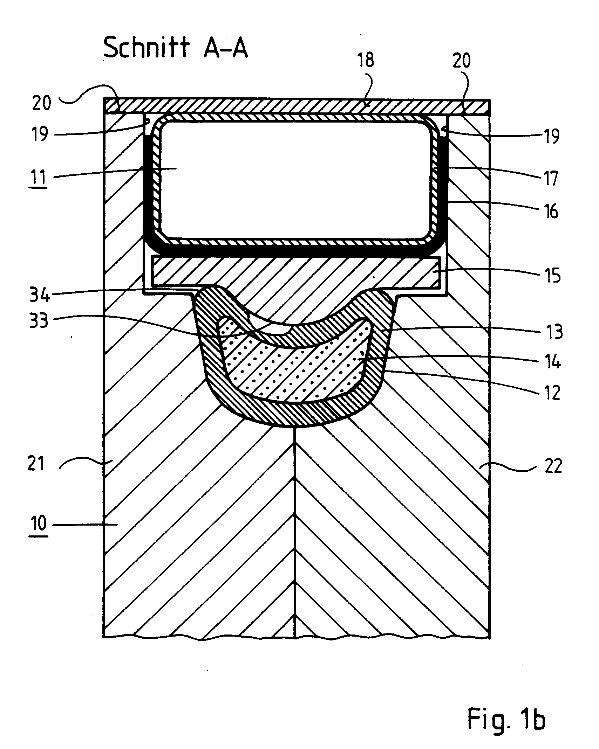

Die in der Figur 1a und 1b dargestellten, einander zugeordneten Reifenteilpreßformen 10 und 11 sind zum Formen des Radkörpers zusammengefügt. Dabei bildet die Reifenteilpreßform 10 eine erste, innere Form und die Reifenteilpreßform 11 eine zweite, äußere Form. In die Reifenteilpreßformen 10 und 11 ist das mit einer Wickellage 12 und einer Gewebeschicht 13 durch eine Variante des später noch angesprochenen Verfahrens umhüllte Kernelement 14 reifenförmig angeordnet. Die zweite Reifenteilpreßform 11 bestehend aus einem Druckring 15, einem Sauggewebe 16, einem Luftschlauch 17 und einem Spannring 18, ist in der Weise zusammengefügt und nacheinander aufgebaut: der Druckring 15 auf der Wickellage 12, das Sauggewebe 16 auf den Seiteninnenwandungen 19 und dem Druckring 15, der Luftschlauch 17 auf dem Sauggewebe und der Spannring 18 auf den Stirnseiten 20 der ersten Reifenteilpreßform 10 und dem Luftschlauch 17. Die erste Reifenteilpreßform 10 ist in zwei Formscheiben 21 und 22 aufgeteilt. Die Formscheiben 21 und 22 sind miteinander verschraubt.

Durch die Zweiteilung der Reifenteilpreßform 10 und 11 kann bequem die Wickellage 12, die Gewebeschicht 13, und das Kernelement 14 in die erste Reifenteilpreßform 10 eingebracht und anschließend mit der zweiten Reifenteilpreßform 11 fixiert und formgepreßt werden. Beim Vorgang des Formpressens von der inneren Wandung 33 der zweiten Reifenteilpreßform 11, also des Druckrings 15, auf die nach außen zeigende Fläche 34 der Wickellage 12, wird eine axial symmetrische bzw. gleichförmige und tangential gleichförmige Druckverteilung bezüglich der Außenflächen 34 der Wickellage erzeugt. Durch diese Maßnahme wird ein querschnittshomogener, konzentrischer Radkörper gewährleistet. Der Druck für die Verformung wird durch Verspannen des Spannrings 18 und durch Aufblasen des Luftschlauchs 17 erzeugt. Dadurch läßt sich in einfacher Weise der Verformungsvorgang realisieren. Ferner wird durch das Pressen mit einem Luftschlauch ein hydrostatischer Spannungszustand erreicht, so daß das Bauteil optimal verdichtet wird.

Das Kernelement 14, die Gewebeschicht 13 und die Wickellage 12 werden dabei nach folgendem Verfahren in die Reifenteilpreßformen 10 und 11 eingebracht:

Ein, insbesondere harzgetränkter, hier nicht dargestellter, Gewebefaden wird in die erste, einen in radialer Richtung des Radkörpers innen gelegenen im wesentlichen zylindrisch ausgebildeten Formwandungsteil enthaltende Reifenteilpreßform 10 tangential gewickelt. Die so gebildete Wickellage 12 der ersten Reifenteilpreßform 10 bedeckt im wesentlichen dieses Formwandungsteil. Das zunächst stabförmige, elastische, durch Verbindung der beiden aneinander anliegenden Enden ringförmig geschlossen ausgebildete Kernelement 14 wird in die erste Reifenteilpreßform 10 auf die Wickellage 12 aufgelegt. Mindestens ein weiterer Gewebefaden wird anschließend an die erste Wickellage 12 tangential gewickelt, so daß das Kernelement 14 im wesentlichen vollständig mit einer Wickellage 12 bedeckt ist. Die zweite Reifenteilpreßform 11 wird in der schon erwähnten Weise auf die erste Reifenteilpreßform 10 gelegt und mit der ersten in der schon beschriebenen Art verspannt und formgepreßt. Der derart geformte und aus den Reifenteilpreßformen 10 und 11 herausgelöste Radkörper wird bei erhöhter Temperatur anschließend ausgehärtet.

In einem anderen, hier nicht dargestellten, Ausführungsbeispiel sind mehrere Kernelemente 14 in die erste Reifenteilpreßform 10 auf die Wickellage 12 zu legen. Dies hat den Vorteil, daß durch mehrere Kernelemente 14, die in ihrer Gesamtheit aneinander anliegend eine spezielle Querschnittsfläche bilden, ein aufwendiges Herstellungsverfahren für ein Kernelement 14 mit eben dieser speziellen Querschnittsfläche vorteilhaft vermieden werden kann. Zugleich wird die Torsionssteifigkeit des Radkörpers erhöht.

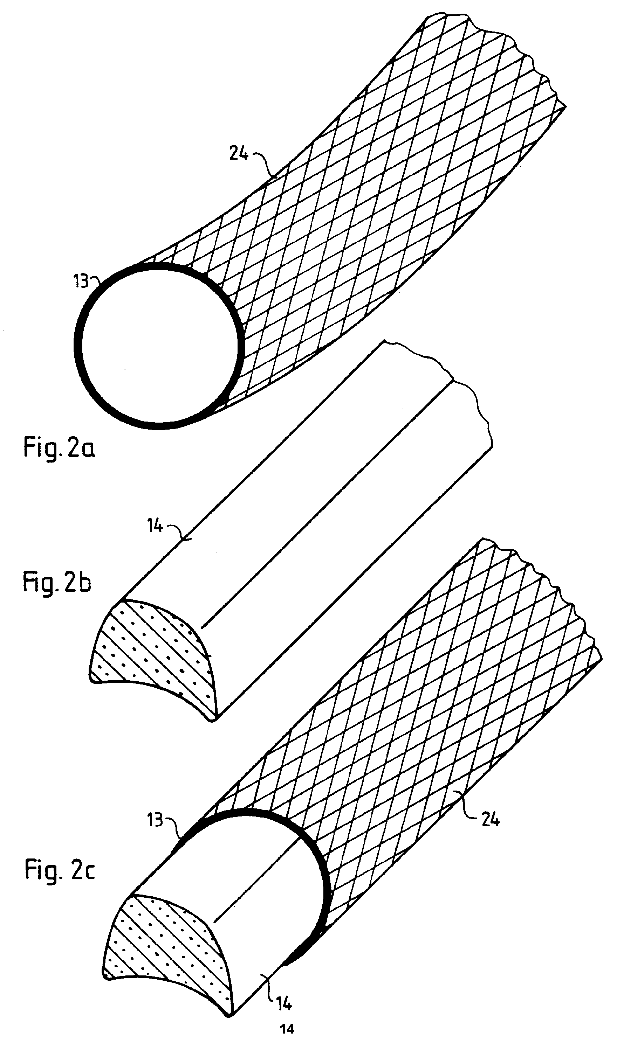

In den Figuren 2 bis 4 sind verschiedene Verfahren zum Umgeben des Kernelements 14 mit der Gewebeschicht 13 dargestellt. Das Kernelement 14 wird vor dem Einbringen in die Reifenteilpreßform 10 zusätzlich von einer Gewebeschicht 13 mit einer diagonal ausgerichteten Faserstruktur umgeben. Die Gewebeschicht 13 ist dabei in Kunststoff getränkt. Durch diese zusätzliche Gewebeschicht 13 wird die Festigkeit des Radkörpers weiter erhöht.

In den Figuren 2a bis 2c sind in perspektivischen Darstellungen Ausschnitte der verwendeten Teile und des Teilaufbaus des Radkörpers gemäß einer Variante des Verfahrens zur Herstellung eines Radkörpers dargestellt. Dabei ist um ein Kernelement 14 herum eine schlauchförmige Gewebeschicht 24 angeordnet.

Die schlauchförmige Gewebeschicht 24 wird dabei nach folgendem Verfahren aufgebracht:

Ein die Gewebeschicht 13 bildender Gewebeschlauch 24 wird über das zunächst stabförmige, elastische Kernelement 14 gezogen, wobei die jeweiligen Enden des Gewebeschlauchs 24 so aneinander anliegend überlappend angeordnet werden, daß das Kernelement 14 und der darüber angeordnete Gewebeschlauch 24 einen geschlossenen Ring bilden. Bei dieser Art der Aufbringung der Gewebeschicht 13 wird in nur einem Arbeitsgang das Kernelement 14 vollständig mit einer Gewebeschicht 13 bzw. 24 umhüllt. Ein homogener Schichtaufbau wird dadurch zusätzlich gewährleistet.

Die Dicke des Kernelements 14 in dem Bereich der sich überlappenden Gewebeschicht 13 ist jeweils geringer ausgebildet ist als die Dicke des sich nicht überlappenden Bereichs. Dabei entspricht die radiale bzw. axiale Gesamtdicke des Radkörpers im Bereich mit überlappenden Gewebeschichten, jeweils der radialen Gesamtdicke des Radkörpers im Bereich der sich nicht überlappenden Gewebeschichten.

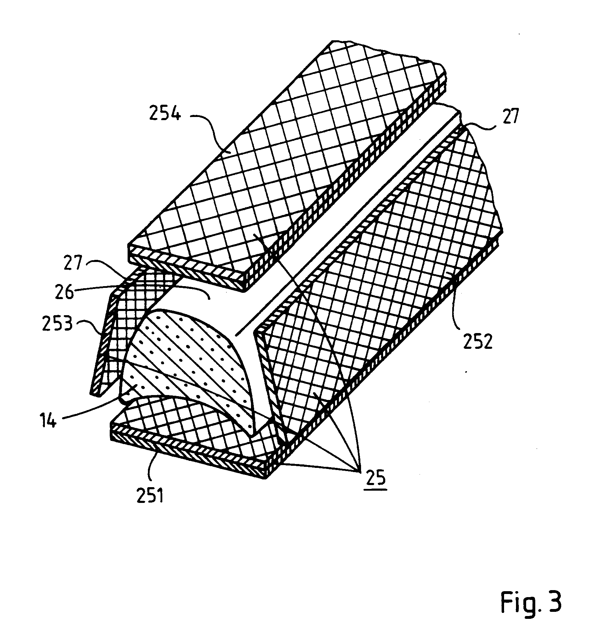

In Figur 3 ist eine perspektivische Darstellung eines Ausschnitts eines Kernelements 14 mit explosionsartig um das Kernstück 14 herum angeordneten Gewebebändern 25 dargestellt. Der Radkörper weist dabei folgenden Aufbau von Innen nach Außen in bezug auf den Radius des Radkörpers auf: Über ein erstes Geweberband 251 ist ein zunächst stabförmiges, elastisches Kernelement 14 angeordnet. Ein zweites und drittes Geweberband 252 und 253 sind seitlich des Kernelements angeordnet. Ein viertes Geweberband 254 ist auf der radial nach außen zeigenden Fläche 26 des Kernelements 14 und den radial nach außen zeigenden Flächen des zweiten und dritten Gewebebandes 252 und 253 angeordnet. Die jeweiligen Gewebebänder können dabei mehrere Schichten aufweisen und in den einzelnen Schichten in einem vorbestimmten Winkel zueinander aufgebracht werden.

Das Umgeben des Kernelements 14 mit der Gewebeschicht 13 erfolgt dadurch, daß das zunächst stabförmige, elastische Kernelement 14 mit einem Geweberband 25 in gleichmäßiger Schichtung jeweils in tangentialer Richtung umwickelt wird, wobei die jeweiligen Enden des zu umwickelnden einen Ring bildenden Kernelements 14 aneinander anliegen. Dabei können die jeweiligen Gewebebänder 25 in einzelnen Schichten in einem vorbestimmten Winkel zueinander aufgebracht werden.

In vorteilhafter Weise kann bei dieser Art der Aufbringung die Dicke der Gewebeschicht 13 um das Kernelement 14 herum kontinuierlich vergrößert werden. Durch die Wicklung des Gewebebandes 25 erhöht sich in vorteilhafter Weise auch das Dämpfungsverhalten des Radkörpers.

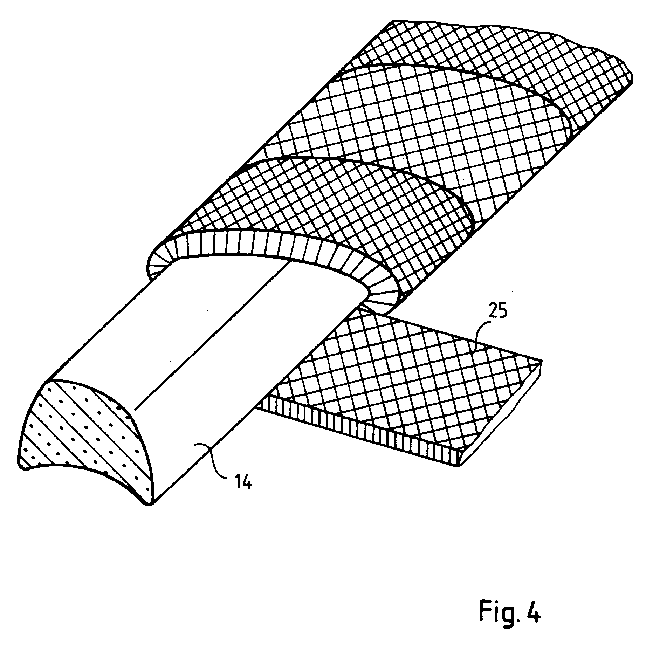

In Figur 4 ist eine perspektivische Darstellung eines Ausschnitts eines Kernelements 14 mit um das Kernstück 14 herum angeordneten Gewebebändern 25 dargestellt.

Das Umgeben des Kernelements 14 mit der Gewebeschicht 13 erfolgt dadurch, daß das zunächst stabförmige, elastische Kernelement 14 mit einem Geweberband 25 in gleichmäßiger Schichtung quer zur tangentialen Richtung umwickelt wird, wobei die jeweiligen Enden des zu umwickelnden einen Ring bildenden Kernelements 14 aneinander anliegen. Dabei kann das Geweberband 25 in einzelnen Schichten aufgebracht werden.

Durch diese Art der Wicklung des Gewebebandes 25 erhöht sich in vorteilhafter Weise die Torsionsfestigkeit des Radkörpers.

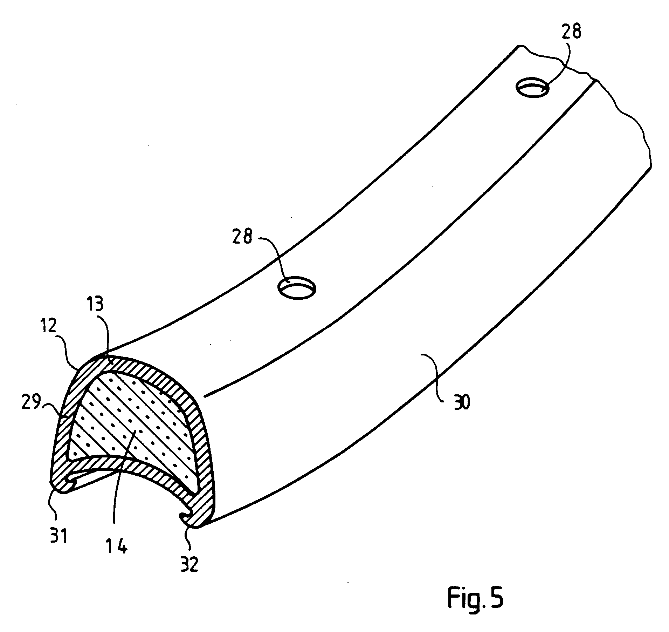

In Figur 5 ist in einer perspektivischen Darstellung ein Ausschnitt eines Radkörpers dargestellt. Der Radkörper, hier eine Fahrradfelge, weist ein geschäumtes, ringförmiges, elastisches Kernelement 14 auf, das vollständig von einer Gewebeschicht 13 und einer Wickellage 12 umhüllt ist. In dem Radkörper sind Bohrungen 28 für Speichen angeordnet, die nach dem Aushärten erzeugt werden. Der Radkörper ist durch das anhand der Figuren 1 bis 4 angesprochene Verfahren hergestellt worden. Die Seitenwandungen 29 und 30 sind als Bremsflächen für eine Felgenbremse ausgebildet. Desweiteren ist die Felge derart an den Flanken 31 und 32 ausgestaltet, daß eine Aufnahme eines Drahtreifens ermöglicht wird.

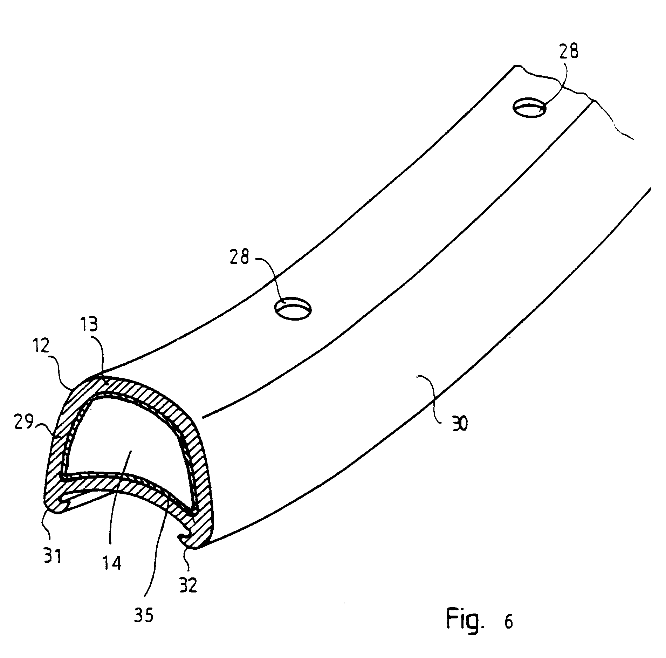

In Figur 6 ist in einer perspektivischen Darstellung ein der Figur 5 entsprechender Ausschnitt des Radkörpers dargestellt.

Das Kernelement besteht dabei aus einem mit Gas gefüllten, aus Polyamid bestehenden Folienschlauch 35. Dieser wird nach dem Verbinden der Enden in der ersten Reifenteilpreßform 10 mit Gas gefüllt. Dabei wird das Gas durch eine in den Folienschlauch 35 injizierte Gaszufuhrleitung in den Folienschlauch 35 gepumpt. Das Kernelement 14 wird dann entsprechend den bereits anhand der Figuren 1 bis 4 beschriebenen Verfahrensschritten weiter behandelt. Bei der Erwärmung beim Aushärtvorgang drückt der Folienschlauch 35 durch das sich ausdehnende, sich im Folienschlauch 35 befindliche Gas gleichmäßig nach außen. Dabei wirken durch den nachgebbaren, nun einen erhöhten Gasinnendruck aufweisenden Folienschlauch 35 zusätzliche Kompressionskräfte von dem Folienschlauch auf die Gewebeschicht 13. Der äußerste Bereich der Gewebeschicht 13 ist dann bereits ausgehärtet, wenn die Kompressionskräfte mit der Erwärmung des Gases wirksam werden.

In einer hier nicht dargestellten Variante werden die Flanken durch zwei kleinere Folienschläuche 35 erzeugt. Dabei werden die Folienschläuche nach dem Aushärten aufgeschnitten und mechanisch nachbehandelt, so daß die Flanken zur Aufnahme eines Drahtreifens geeignet sind.

In dem Radkörper sind ebenfalls die Bohrungen 28 für Speichen angeordnet, die nach dem Aushärten erzeugt werden.

## Patentansprüche

1. Verfahren zur Herstellung eines Radkörpers, vorzugsweise einer Speichenradfelge, aus faserverstärktem Kunststoff, wobei die Felge ein Kernelement (14) aufweist, das eine in bezug auf den faserverstärkten

EP 0 390 300 B1

Kunststoff geringere Dichte aufweist,

**gekennzeichnet durch** folgende Verfahrensschritte:

ein, insbesondere harzgetränkter, Gewebefaden wird in eine erste, einen in radialer Richtung des Radkörpers innen gelegenen im wesentlichen zylindrisch ausgebildeten Wandungsteil enthaltende Reifenteilpreßform (10) derart tangential gewickelt, daß die so gebildete Wickellage (12) diesen Wandungsteil der ersten Reifenteilpreßform (10) im wesentlichen bedeckt,

ein zunächst stabförmiges, elastisches, durch Verbindung seiner beiden aneinander anliegenden Enden ringförmig geschlossen ausgebildetes Kernelement (14) in die erste Reifenteilpreßform (10) auf die Wickellage (12) aufgelegt,

mindestens ein weiterer Gewebefaden wird anschließend an die erste Wickellage (12) derart tangential gewickelt, daß das Kernelement (14) im wesentlichen vollständig mit einer Gewebelage (13) bedeckt ist,

eine zweite Reifenteilpreßform (11) wird auf die erste Reifenteilpreßform (10) aufgelegt und mit der ersten Reifenteilpreßform (10) derart unter Druckeinwirkung verbunden, daß das von einer Wickellage (12) umgebene Kernelement (14) in der durch die Reifenteilpreßformen (10, 11) vorbestimmten Weise geformt wird,

die derart geformte und aus den Reifenteilpreßformen (10, 11) herausgelöste Felge wird bei erhöhter Temperatur ausgehärtet.

2. Verfahren nach Anspruch 1, **dadurch gekennzeichnet,** daß das Kernelement (14) vor dem Einbringen in die Form zusätzlich von einer Gewebeschicht (13) mit einer vorzugsweise radial oder diagonal ausgerichteten Faserstruktur umgeben wird.

3. Verfahren nach Anspruch 2, **dadurch gekennzeichnet,** daß die Gewebeschicht (13) in Kunststoff getränkt wird.

4. Verfahren nach einem der Ansprüche 2 oder 3, **dadurch gekennzeichnet,** daß das Umgeben des Kernelements (14) mit der Gewebeschicht (13) dadurch erfolgt, daß ein die Gewebeschicht (13) bildender Gewebeschlauch (24) über das stabförmige, elastische Kernelement (14) gezogen wird, wobei die jeweiligen Enden des Gewebeschlauchs (24) so aneinander anliegend überlappend angeordnet werden, daß das Kernelement (14) und der darüber angeordnete Gewebeschlauch (24) einen geschlossenen Ring bilden.

5. Verfahren nach einem der Ansprüche 2 oder 3, **dadurch gekennzeichnet,** daß das Umgeben des Kernelements (14) mit der Gewebeschicht (13) dadurch erfolgt, daß das stabförmige, elastische Kernelement (14) mit einem Gewebeband (25) in gleichmäßiger Schichtung längs und/oder quer zur tangentialen Richtung umwickelt wird, wobei die jeweiligen Enden des zu umwickelnden einen Ring bildenden Kernstücks (14) aneinander anliegen.

6. Verfahren nach Anspruch 5, **dadurch gekennzeichnet,** daß die Gewebebänder (25, 251 bis 254) in einzelnen Schichten in einem vorbestimmten Winkel zueinander aufgebracht werden.

7. Verfahren nach einem der vorangehenden Ansprüche, **dadurch gekennzeichnet,** daß mehrere Kernelemente (14) in die erste Reifenteilpreßform (10) auf die Wickellage (12) gelegt werden.

8. Verfahren nach einem der vorangehenden Ansprüche, **dadurch gekennzeichnet,** daß das Kernelement (14) als elastischer Folienschlauch (35) ausgebildet ist, der nach dem Verbinden der Enden mit Gas gefüllt wird.

9. Verfahren nach Anspruch 8, **dadurch gekennzeichnet,** daß das Gas durch eine in den Folienschlauch (35) injizierte Gaszufuhrleitung in den Folienschlauch gepumpt wird.

10. Verfahren nach einem der Ansprüche 8 und 9, **dadurch gekennzeichnet,** daß der Folienschlauch (35) nach dem Aushärten aufgeschnitten wird.

11. Verfahren nach einem der vorangehenden Ansprüche, **dadurch gekennzeichnet,** daß beim Vorgang des Formpressens von der inneren Wandung (33) der zweiten Reifenteilpreßform (11) auf die nach außen zeigende Fläche (34) der Wickellage (12), eine axial symmetrische bzw. gleichförmige und tangential gleichförmige Druckverteilung bezüglich der Außenflächen (34) der Wickellage (12) erzeugt wird.

12. Verfahren nach einem der Ansprüche 1 bis 7, **dadurch gekennzeichnet,** daß die Dicke des stabförmigen Kernelements (14) in dem Bereich der sich überlappenden Gewebeschicht (13) jeweils geringer ausgebildet ist als die Dicke des sich nicht überlappenden Bereichs.

13. Verfahren nach Anspruch 12, **dadurch gekennzeichnet,** daß die radiale bzw. axiale Gesamtdicke des Radkörpers im Bereich mit überlappenden Gewebeschichten (13), jeweils der radialen Gesamtdicke des Radkörpers im Bereich der sich nicht überlappenden Gewebeschichten (13) entspricht.

14. Verfahren nach einem der vorangehenden Ansprüche, **dadurch gekennzeichnet,** daß nach dem Aushärten Bohrungen (28) für Speichen erzeugt werden.

15. Verfahren nach einem der vorangehenden Ansprüche, **dadurch gekennzeichnet,** daß die zweite Reifenteilpreßform (11), bestehend aus einem Druckring (15), einem Sauggewebe (16), einem Luftschlauch (17) und einem Spannring (18), in der Weise zusamengefügt wird, daß nacheinander aufgelegt werden: der Druckring (15) auf die Wickellage (12), das Sauggewebe (16) auf die Seiteninnenwandungen (19) und den Druckring (15), der Luftschlauch (17) auf das Sauggewebe (16) und der Spannring (18) auf die Stirnseiten (20) der ersten

7

Reifenteilpreßform (10) und den Luftschlauch (17).

16. Verfahren nach Anspruch 15, **dadurch gekennzeichnet,** daß der Druck für Verformung durch Verspannen des Spannrings (18) und durch Aufblasen des Luftschlauchs (17) erzeugt wird.

17. Radkörper, vorzugsweise Speichenrad, aus faserverärktem Kunststoff, wobei der Radkörper ein Kernelement aufweist, das eine in bezug auf den faserverstärkten Kunststoff geringere Dichte aufweist, insbesondere als Produkt eines Verfahrens nach einem der vorangehenden Ansprüche,

**dadurch gekennzeichnet,**

daß das elastisch ausgebildete Kernelement (14) von dem faserverstärkten Kunststoff vollständig umhüllt wird.

18. Radkörper nach Anspruch 17, **dadurch gekennzeichnet,** daß das Kernelement (14) ringförmig ausgebildet ist.

19. Radkörper nach Anspruch 18, **dadurch gekennzeichnet,** daß das Kernelement (14) als Folienschlauch (35) ausgebildet ist.

20. Radkörper nach Anspruch 19, **dadurch gekennzeichnet,** daß das der Folienschlauch (35) aus Polyamid besteht.

21. Radkörper nach einem der vorangehenden Ansprüche, **dadurch gekennzeichnet,** daß mehrere Kernelemente (14) im Radkörper angeordnet sind.

22. Radkörper nach Anspruch 17 oder 18 **dadurch gekennzeichnet,** daß das Kernelement (14) aus Schaumstoff besteht.

23. Radkörper nach den Ansprüchen 18 bis 22, **dadurch gekennzeichnet,** daß die Seitenwandungen (29, 30) als Bremsflächen für eine Felgenbremse ausgebildet sind.

24. Radkörper nach einem der Ansprüche 18 bis 23, **gekennzeichnet durch** eine Ausgestaltung zur Aufnahme eines Drahtreifens.

## Claims

1. Method for producing a wheel body, preferably the rim of a spoked wheel, from fibre-reinforced plastics, the rim having a core element (14) which is of lower density than the fibre-reinforced plastics, characterised by the following steps:

a, more particularly resin-impregnated, textile thread is tangentially wound into a first pressing mould (10) for a tyre section containing a substantially cylindrical wall portion on the inside, in the radial direction of the wheel body, in such a way that the wound layer (12) thus formed substantially covers this wall portion of the first pressing mould (10) for a tyre section,

an initially rod-shaped, elastic core element (14) made into the form of a closed ring by joining the two abutting ends together is placed on the wound layer (12) in the first tyre section pressing mould (10),

at least one other textile thread is then tangentially wound onto the first wound layer (12) so that the core element (14) is substantially fully covered by a fabric layer (13),

a second tyre section pressing mould (11) is placed on the first tyre section pressing mould (10) and connected to the first tyre section pressing mould (10) under the effect of pressure in such a way that the core element (14) surrounded by a wound layer (12) is shaped in the manner determined by the tyre section pressing moulds (10,11),

the rim shaped in this way and released from the tyre section pressing moulds (10,11) is hardened at elevated temperature.

2. Method according to claim 1, characterised in that before being placed in the mould the core element (14) is additionally surrounded by a fabric layer (13) having a preferably radial or diagonal fibre structure.

3. Method according to claim 2, characterised in that the fabric layer (13) is impregnated with plastics.

4. Method according to one of claims 2 or 3, characterised in that the core element (14) is surrounded by the fabric layer (13) by pulling a fabric tube (24) which forms the fabric layer (13) over the rod-shaped, elastic core element (14), the ends of the fabric tube (24) being arranged to overlap one another so that the core element (14) and the fabric tube (24) arranged over it form a closed ring.

5. Method according to one of claims 2 or 3, characterised in that the core element (14) is surrounded by the fabric layer (13) by wrapping the rod-shaped, elastic core element (14) with a fabric strip (25) in a uniform layer longitudinally and/or transversely with respect to the tangential direction, so that the ends of the core member (14) which is to be wrapped and which forms a ring abut on one another.

6. Method according to claim 5, characterised in that fabric strips (25, 251-254) are applied in individual layers at a predetermined angle to one another.

7. Method according to one of the preceding claims, characterised in that a plurality of core elements (14) are placed on the wound layer (12) in the first tyre section pressing mould (10).

8. Method according to one of the preceding claims, characterised in that the core element (14) takes the form of an elastic tube of film (35) which is filled with gas after the ends have been joined together.

9. Method according to claim 8, characterised in that the gas is pumped into the tube of film through a gas supply line injected into the tube of film (35).

10. Method according to one of claims 8 and 9, characterised in that the film tube (35) is cut open after hardening.

11. Method according to one of the preceding claims, characterised in that, during the pressing operation, the inner wall (33) of the second tyre section pressing mould (11) produces, on the outward facing surface (34) of the wound layer (12), an axially symmetrical or uniform and tangentially uniform distribution of pressure with respect to the outer surface (34) of the wound layer (12).

12. Method according to one of claims 1 to 7, characterised in that the thickness of the rod-shaped core element (14) in the region of the overlapping fabric layer (13) is less than the thickness of the non-overlapping area.

13. Method according to claim 12, characterised in that the overall radial or axial thickness of the wheel body in the region of the overlapping fabric layers (13) corresponds to the overall radial thickness of the wheel body in the region of the non-overlapping fabric layers (13).

14. Method according to one of the preceding claims, characterised in that bores (28) for spokes are produced after the hardening process.

15. Method according to one of the preceding claims, characterised in that the second tyre section pressing mould (11), consisting of a thrust ring (15), a suction fabric (16), an air tube (17) and a tension ring (18), is assembled by putting the following components on one after another: the thrust ring (15) on the wound layer (12) the suction fabric (16) on the inner side walls (19) and the thrust ring (15), the air tube (17) on the suction fabric (16) and the tension ring (18) on the end faces (20) of the first tyre section pressing mould (10) and the air tube (17).

16. Method according to claim 15, characterised in that the pressure for deformation is generated by tightening the tension ring (18) and inflating the air tube (17).

17. Wheel body, preferably a spoked wheel, of fibre-reinforced plastics, in which the wheel body has a core element (14) which is of lower density than the fibre-reinforced plastics, more particularly as the product of a method according to one of the preceding claims,
characterised in that
the core element (14) of elastic construction is entirely enclosed by the fibre-reinforced plastics.

18. Wheel body according to claim 17, characterised in that the core element (14) is of annular construction.

19. Wheel body according to claim 18, characterised in that the core element (14) is constructed as a film tube (35).

20. Wheel body according to claim 19, characterised in that the film tube (35) comprises of polyamide.

21. Wheel body according to one of the preceding claims, characterised in that a plurality of core elements (14) are arranged in the wheel body.

22. Wheel body according to claim 17 or 18, characterised in that the core element (14) consists of foam.

23. Wheel body according to claims 18 to 22, characterised in that the side walls (29,30) are constructed as braking surfaces for a rim brake.

24. Wheel body according to one of claims 18 to 23, characterised in that it is constructed to accommodate a wire-reinforced tyre.

## Revendications

1. Procédé de fabrication d'un corps de roue, de préférence une jante de roue à rayons, en une matière plastique renforcée de fibres, la jante comportant un élément d'âme (14) qui présente une densité moindre par rapport à celle de la matière plastique renforcée de fibres,
caractérisé par les opérations de procédé suivantes:
un fil textile, notamment imprégné de résine, est enroulé tangentiellement dans une première partie de moule de pressage en forme d'anneau (10), qui comporte une partie de paroi de configuration essentiellement cylindrique et de disposition intérieure dans la direction radiale du corps de roue, de manière à ce que la nappe formée par enroulement (12) ainsi créée, recouvre sensiblement cette partie de paroi de la première partie de moule de pressage en forme d'anneau (10),
un élément d'âme (14) tout d'abord en forme de barre, élastique et fermé à la manière d'un anneau par la liaison de ses deux extrémités adjacentes, est déposé dans la première partie de moule de pressage en forme d'anneau (10), sur la nappe formée par enroulement (12),

au moins un autre fil textile est ensuite enroulé tangentiellement contre la première nappe formée par enroulement (12), de telle sorte que l'élément d'âme (14) est sensiblement totalement recouvert par une nappe textile (13),

une seconde partie de moule de pressage en forme d'anneau (11) est posée sur la première partie de moule de pressage en forme d'anneau (10) et est liée à la première partie de moule de pressage en forme d'anneau (10) sous l'action d'une pression, de façon à ce que l'élément d'âme (14) entouré d'une nappe formée par enroulement (12) est moulé de la manière prédéfinie par les parties de moule de pressage en forme d'anneau (10, 11),

la jante ainsi moulée et extraite des parties de moule de pressage en forme d'anneau (10, 11) est ensuite durcie à température plus élevée.

2. Procédé selon la revendication 1, caractérisé en ce que l'élément d'âme (14), avant son introduction dans le moule, est entouré en supplément par une nappe textile (13) présentant une structure de fibres à orientation de préférence radiale ou diagonale.

3. Procédé selon la revendication 2, caractérisé en ce que la nappe textile (13) est imprégnée de matière plastique.

4. Procédé selon l'une des revendications 2 ou 3, caractérisé en ce que l''enveloppement de l'élément d'âme (14) par la nappe textile (13) s'effectue par le fait qu'un boyau textile (24) formant la nappe textile (13) est tiré par-dessus l'élément d'âme (14) élastique en forme de barre, les extrémités respectives du boyau textile (24) étant disposées de manière à se chevaucher réciproquement de telle sorte que l'élément d'âme (14) et le boyau textile (24) qui le recouvre forment un anneau fermé.

5. Procédé selon l'une des revendications 2 ou 3, caractérisé en ce que l'enveloppement de l'élément d'âme (14) par la nappe textile (13) peut être effectué par le fait que l'on enroule une bande textile (25) sur l'élément d'âme (14) élastique en forme de barre, selon une succession de nappes, régulière, dans la direction longitudinale et/ou transversalement à la direction tangentielle, les extrémités respectives de l'élément d'âme (14) formant un anneau, étant adjacentes.

6. Procédé selon la revendication 5, caractérisé en ce que les bandes textiles (25, 251 à 254) sont rapportées en nappes individuelles en formant un angle prédéterminé entre-elles.

7. Procédé selon l'une des revendications précédentes, caractérisé en ce que plusieurs éléments d'âme (14) sont déposés dans la première partie de moule de pressage en forme d'anneau (10), sur la nappe formée par enroulement (12).

8. Procédé selon l'une des revendications précédentes, caractérisé en ce que l'élément d'âme (14) est réalisé sous la forme d'un boyau à paroi mince (35) élastique, qui après liaison des extrémités est rempli de gaz.

9. Procédé selon la revendication 8, caractérisé en ce que le gaz est introduit par pompage au-travers d'une conduite d'alimentation en gaz introduite dans boyau à paroi mince (35).

10. Procédé selon l'une des revendications 8 et 9, caractérisé en ce que le boyau à paroi mince (35) est coupé après le durcissement.

11. Procédé selon l'une des revendications précédentes, caractérisé en ce que lors de l'opération de moulage par pressage, on crée, à partir de la paroi intérieure (33) de la seconde partie de moule de pressage en forme d'anneau (11), en direction de la surface dirigée vers l'extérieur (34), de la nappe formée par enroulement (12), une répartition de pression symétrique et uniforme axialement et également uniforme tangentiellement, par rapport aux surfaces extérieures (34) de la nappe formée par enroulement (12).

12. Procédé selon l'une des revendications 1 à 7, caractérisé en ce que l'épaisseur de l'élément d'âme (14) en forme de barre, dans la zone où la nappe textile (13) se chevauche réciproquement, est plus faible que l'épaisseur respective dans la zone où il n'y a pas de chevauchement.

13. Procédé selon la revendication 12, caractérisé en ce que l'épaisseur globale radiale ou axiale du corps de roue dans la zone comportant des chevauchements de nappes textiles (13), correspond respectivement à l'épaisseur globale radiale du corps de roue dans la zone où il n'y a pas de chevauchement de nappes textiles (13).

14. Procédé selon l'une des revendications précédentes, caractérisé en ce qu'après le durcissement, sont réalisés des trous (28) pour des rayons.

15. Procédé selon l'une des revendications précédentes, caractérisé en ce que la seconde partie de moule de pressage en forme d'anneau (11), composée d'un anneau de pression (15), d'un tissu d'aspiration (16), d'un boyau formant chambre à air (17) et d'un anneau de serrage (18), est assemblée de la manière suivante, à savoir que l'on superpose successivement, l'anneau de pression (15) sur la nappe formée par enroulement (12), le tissu d'aspiration (16) sur les parois latérales intérieures (19) et sur l'anneau de pression (15), le boyau formant chambre à air (17) sur le tissu d'aspiration (16), et l'anneau de serrage (18) sur les faces frontales (20) de la première partie de moule de pressage en forme d'anneau (10) et sur le boyau formant chambre à air (17).

16. Procédé selon la revendication 15, caractérisé en ce que la pression pour la mise en forme est engendrée par serrage de l'anneau de serrage (18) et par gonflage du boyau formant chambre à air (17).

17. Corps de roue, de préférence une roue à rayons, en matière plastique renforcée de fibres, le corps de roue comportant un élément d'âme (14) qui présente une densité moindre par rapport à la matière plastique renforcée de fibres, notamment en tant que produit obtenu par un procédé selon l'une des revendications précédentes,

caractérisé en ce que

l'élément d'âme (14) de configuration élastique, est totalement enveloppé par la matière plastique renforcée de fibres.

18. Corps de roue selon la revendication 17, caractérisé en ce que l'élément d'âme (14) est de configuration annulaire.

19. Corps de roue selon la revendication 18, caractérisé en ce que l'élément d'âme (14) est réalisé sous la forme d'un boyau à paroi mince (35).

20. Corps de roue selon la revendication 19, caractérisé en ce que le boyau à paroi mince (35) est en polyamide.

21. Corps de roue selon l'une des revendications précédentes, caractérisé en ce que plusieurs éléments d'âme (14) sont disposés dans le corps de roue.

22. Corps de roue selon la revendication 17 ou 18, caractérisé en ce que l'élément d'âme (14) est en mousse.

23. Corps de roue selon les revendications 18 à 22, caractérisé en ce que les parois latérales (29, 30) se présentent sous la forme de surfaces de freinage pour un frein de jante.

24. Corps de roue selon l'une des revendications 18 à 23, caractérisé par une configuration permettant de recevoir un pneumatique à tringles.

Fig.1a

Schnitt A-A

Fig. 1b

Fig. 2a

Fig. 2b

Fig. 2c

Fig. 3

Fig. 4

Fig. 5

Fig. 6